# EUROPEAN PATENT SPECIFICATION

(11) **EP 4 224 451 B1**
(45) Date of publication and mention of the grant of the patent: **22.07.2026**
(21) Application number: 23155612.7
(22) Date of filing: 08.02.2023
(51) Int. Cl.: G08B 19/00

(54) **COMBINATION SMOKE AND AIR QUALITY DETECTION**
KOMBINIERTE RAUCH- UND LUFTQUALITÄTSERKENNUNG
DÉTECTION COMBINÉE DE QUALITÉ DE FUMÉE ET D'AIR

(30) Priority: 08.02.2022 US 202263307837 P
(43) Date of publication of application: 09.08.2023
(73) Proprietor: Carrier Corporation, Palm Beach Gardens, FL 33418 (US)
(72) Inventor: BAILEY, Callum, Bradenton, 34202 (US); PATEL, Vipul, Bradenton, 34202 (US); GADONNIEX, Dennis, Bradenton, 34202 (US)
(74) Representative: Dehns

(56) References cited:
- JP-A- 2015 052 860
- US-A- 5 422 629
- US-A1- 2002 154 018
- US-A1- 2007 139 649
- US-A1- 2010 039 274
- US-A1- 2016 335 868
- US-A1- 2021 233 373
- US-A1- 2021 256 826
- SSI STAFF: "Kidde's Latest Smoke Detector Achieves Early Compliance to 2021 UL Safety Standard - Security Sales & Integration", 24 July 2020 (2020-07-24), XP093057985, Retrieved from the Internet <URL:https://www.securitysales.com/fire-intrusion/kiddes-smoke-detector-2021-ul-standard/> [retrieved on 20230626]

## Description

Exemplary embodiments of the present invention relate to a life safety detector, and more particularly, to a life safety detector operable as a smoke detector and an air quality detector.

Common photoelectric smoke detectors include a light source and a photoelectric receiver to detect whether or not smoke is present. When there is no smoke in the optic chamber, and the optic chamber is empty or mostly empty, the photoelectric receiver typically receives a small amount of light reflected from the chamber surfaces. On the other hand, when smoke is present in the optic chamber, the photoelectric receiver receives more light due to the light being reflected from the smoke particles. When an amount of light received by the receiver exceeds a certain threshold, an alarm is triggered.

It is becoming more and more desirable to monitor the indoor air quality of the same space being monitored by the smoke detectors. Indoor air quality may be monitored by detecting the presence of air pollutants, such as PM_{2.5} and PM₁₀, for example. Such monitoring is typically performed by separate indoor air quality sensors. Commercially available indoor air quality sensors typically use a laser and a fan to supply air to the interior of the sensor. Integration of such a sensor into an existing smoke detector is challenging because the laser consumes more power than is typically available within a smoke detector. In addition, inclusion of a fan poses a risk of blowing smoke away from the detector.

US 2021/256826 A1 discloses a monitoring device with a plurality of radiation sources emitting different types of radiation. At least one radiation detector is situated to detect radiation reflected off airborne particles.

JP 2015 052860 A discloses an alarm capable of measuring suspended particulate matter with a scattered light type smoke detection structure.

A first aspect of the invention provides a life safety detector comprising a housing defining a detection chamber for receiving ambient material, at least one light source configured to emit light into the detection chamber, at least one light sensing device operable to receive light reflected from the ambient materials in the detection chamber; and a processing device coupled to the at least one light sensing device. In a first mode of operation, the light received by the at least one light sensing device within the detection chamber is indicative of smoke, and in a second mode of operation, the light received by the at least one light sensing device within the detection chamber is indicative of an indoor air quality. The housing defining the detection chamber comprises a base and an optical cover mounted to the base, the detection chamber being formed between the base and an interior surface of the optical cover. The detection chamber comprises a light trapping feature. The light trapping feature comprises a tower extending from the base, the tower is positioned within the detection chamber to block light emitted from the at least one light source from being directly received by the at least one light sensing device. At least a portion of the tower comprises a plurality of ridges.

The detection chamber may be a dark photo detection chamber.

The optical cover may have a wall, and the wall may be arranged at a non-perpendicular angle to the base.

The wall may be arranged between about 40° and about 75° relative to the base.

The optical cover may have a wall and the light trapping feature may comprise a plurality of linear terraces formed at the interior surface of the wall.

Each of the plurality of linear terraces may have a tooth, and adjacent teeth may be arranged at a non-parallel angle relative to one another.

The base may comprise at least one mounting portion having a channel for supporting one or more of the at least one light source and the at least one light sensing device, the light trapping feature may comprise a plurality of spiral ridges formed at the channel.

At least one of the base and the optical cover may include carbon black.

At least one of the base and the optical cover may have a surface resistivity between about 10 ohm-cm and about 1000ohm-cm.

A surface of at least one of the base and the optical cover facing the detection chamber may be roughened.

At least one of the light sensing devices may feature an optical filter.

The optical filter may selectively remove light of specified wavelengths.

The optical filter may selectively remove light of specified polarizations.

A second aspect of the invention provides a method of operating a life safety detector as defined in the first aspect. The method includes switching from a first mode for detecting smoke to a second mode for monitoring an indoor air quality, transmitting a light from at least one light source into a detection chamber positioned within an interior of a housing of the life safety detector, and receiving a scattered light within the detection chamber at a light sensing device. The scattered light is indicative of a presence of airborne particles having a diameter less than 2.5 micrometers and 10 micrometers.

Switching from the first mode for detecting smoke to the second mode for monitoring the indoor air quality may comprise at least one of increasing an intensity of the light transmitted from the at least one light source relative to the first mode and/or increasing a time that the at least one light source is energized relative to the first mode.

A wavelength of the light transmitted from the at least one light source during the second mode may be different than the wavelength of the light transmitted from the at least one light source during the first mode.

The light transmitted from the at least one light source during the second mode may be infrared.

The following descriptions should not be considered limiting in any way. With reference to the accompanying drawings, like elements are numbered alike:
FIG. 1 is a perspective view of an exemplary life safety detector;
FIG. 1a is a partially exploded perspective view of the life safety detector of FIG. 1;
FIG. 2 is a plan view of a portion of a life safety detector;
FIG. 3 is a perspective view of an exemplary optical chamber assembly of a life safety detector;
FIG. 4 is a perspective view of a portion of the optical chamber assembly of FIG. 3;
FIG. 5 is a schematic diagram of an exemplary control system of a life safety detector;
FIG. 6 is flow diagram illustrating an exemplary method of monitoring an indoor air quality using the optical chamber assembly;
FIG. 7 is a perspective view of an exemplary optical chamber assembly including a light trapping feature;
FIG. 8 is cross-sectional view of the optical cover of FIG. 7;
FIG. 9a is a perspective view of an interior surface of the optical cover of FIG. 7;
FIG. 9b is a detailed plan view of the linear terraces of the optical cover of FIG. 9a; and
FIG. 10 is a plan view of a mounting portion of the optical chamber.

A detailed description of one or more embodiments of the disclosed apparatus and method are presented herein by way of exemplification and not limitation with reference to the Figures.

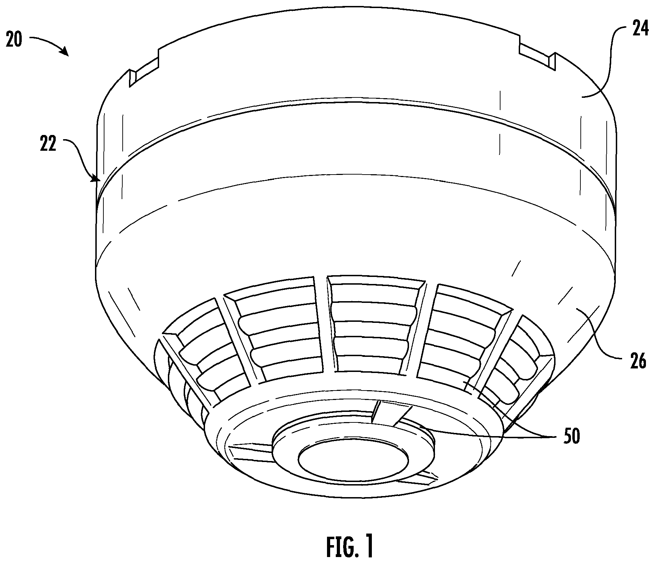

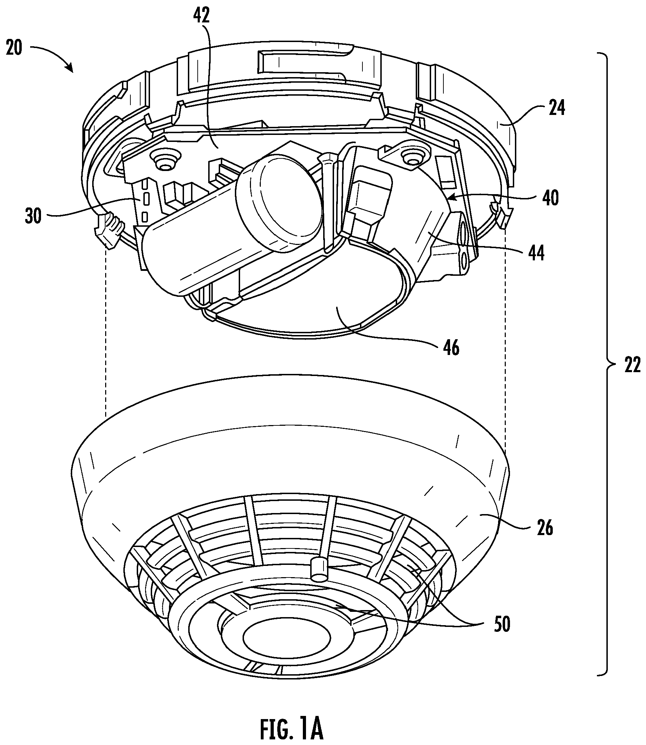

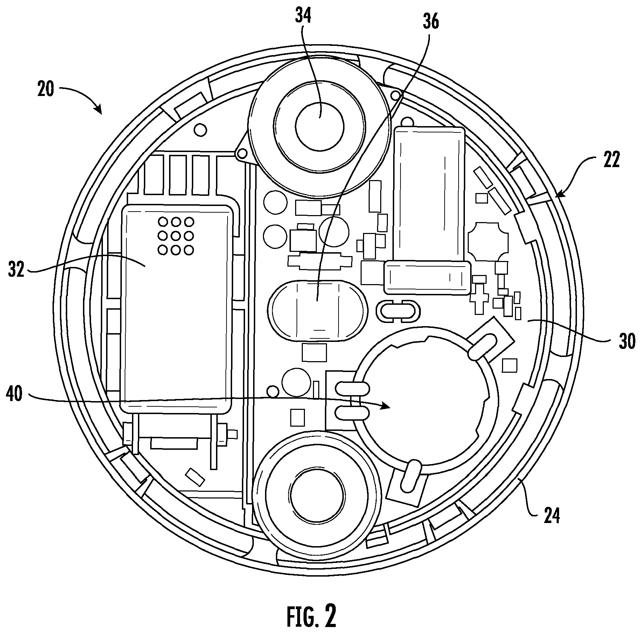

With reference now to FIGS. 1, 1a, and 2, an example of a life safety detector 20, such as a photoelectric smoke detector or alarm for example, is illustrated. As shown, the life safety detector 20 includes a housing 22 including a first upper housing portion 24 and a second, lower housing portion 26 that is permanently or removably connected to the first housing portion 24. When the first and second housing portions 24, 26 are connected, the first and second housing portions 24, 26 enclose the controls and other components necessary for operation of the device 20. As used herein, the terms "upper", " lower", and the like are in reference to the device 20 in use as it is mounted on a surface, such as a ceiling in a building for example. Therefore, the upper housing portion 24 is typically closer to the ceiling than the lower housing portion 26, and the lower housing portion 26 is typically the portion of the device 20 that will face downward toward the floor of the building. In some embodiments, device 20 may be mounted on a wall such that upper housing portion 24 is closer to the wall than the lower housing portion 26, and the lower housing portion 26 is typically the portion of the device 20 that will face outward toward the interior space of the room or space to be monitored.

As shown in FIG. 2, the life safety detector 20 further includes controls including a printed circuit board 30 disposed within the upper housing portion. The printed circuit board 30 includes the circuitry and/or components associated with at least one detection circuit (not shown) and at least one alarm circuit (not shown). In some embodiments, the device 20 may be hardwired to a power source (not shown) located within the building or area where the device 20 is mounted, remote from the device 20. In such embodiments, the printed circuit board 30 may be directly or indirectly connected to the power source. In an embodiment, the device 20 may include a compartment 32 for receiving one or more batteries sufficient to provide the power necessary to operate the device 20 for an extended period of time. In an embodiment, the power provided by the batteries may be the sole source of power used to operate the device 20. However, in other embodiments, the battery power may be supplemental to the remote power source, for example in the event of a failure or loss of power at the power source.

A sound generation mechanism 34 may be connected to the printed circuit board 30 within the housing 22. The sound generation mechanism 34 may be operable to receive power from the printed circuit board 30 to generate a noise in response to detection of a condition. In addition, one or more actuatable mechanisms 36, such as a button for example, may be connected to the printed circuit board 30 and is received within an opening formed in the lower housing portion 26. The actuatable mechanism 36 may be configured to perform one or more functions of the life safety detector 20 when actuated. Examples of operations performed via the actuatable mechanism 36 include, but are not limited to, a press to test function, a smoke alarm "hush", a low battery "hush", and end of life "hush", radio frequency enrollment of additional life safety detectors 20 such as in a detection system including a plurality of life safety detectors configured to communicate with one another wirelessly, and to reset the unit once removed from its packaging. Although the actuatable mechanism 36 is shown positioned at the center of the lower housing portion 26, embodiments where the actuatable mechanism 36 is located at another position are also within the scope of the invention.

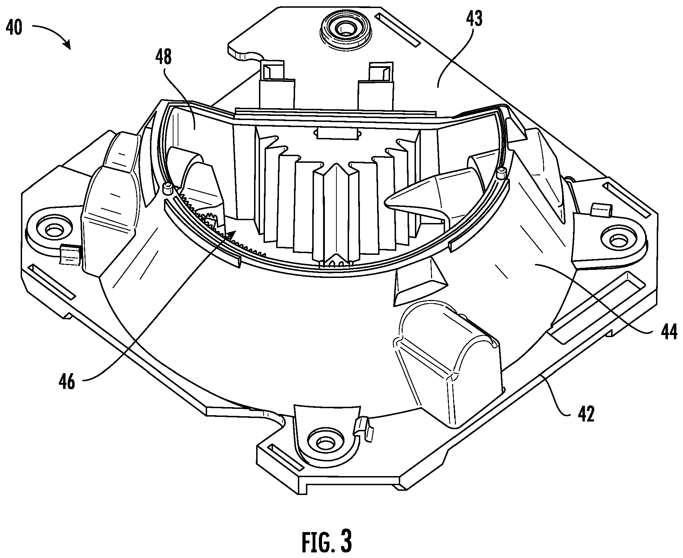

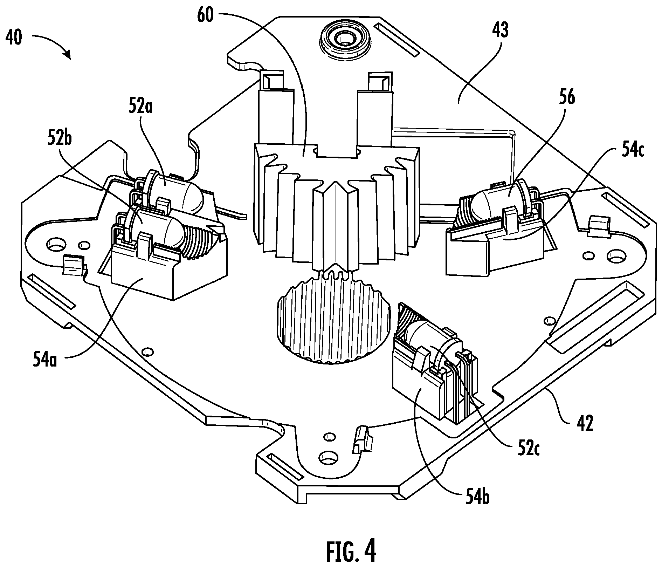

With continued reference to FIG. 2 and further reference to FIGS. 3 and 4, the life safety detector 20 additionally includes one or more components that define an optical chamber assembly 40 within the interior of the housing 22. The optical chamber assembly 40 is generally open to or in fluid communication with the area surrounding the life safety detector 20 and is thus receptive of ambient materials through a grating or another similar feature. The ambient materials may include air as well as smoke and non-smoke particles that are carried by the air.

The optical chamber assembly 40 includes a base 42. The circuit board 30 may be positioned between the base 42 and the upper housing portion 24 to mechanically support and electrically connect electronic components of the device 20. An optical cover 44 is removably or permanently attached to the base 42 adjacent a first surface 43 thereof. Accordingly, a detection chamber 46 is formed between the interior surface 48 of the optical cover 44 and the surface 43 of the base 42.

As shown in FIG. 1, the lower housing portion 26 includes at least one entry portion 50 through which air having particles entrained therein may enter into the life safety detector 20. The lower housing portion 26 may be connectable to the upper housing portion 24 in overlapping arrangement with the optical cover 44. As a result, the one or more entry portions 50 are arranged in fluid communication with and form part of a fluid flow path for delivering air and any particles entrained therein from the atmosphere surrounding the device 20 into the detection chamber 46.

As shown in FIG. 4, the optical chamber assembly 40 additionally includes at least one light source, such as a light emitting diode for example. In the illustrated, non-limiting embodiment, the at least one light source includes a first light source 52a, a second light source 52b, and a third light source 52c. However, it should be understood that embodiments having a single light source, two light sources, or more than three light sources, are within the scope of the invention. The base includes at least one mounting portion for supporting the at least one light source. As shown, the first light source 52a and the second light source 52b are arranged at a first mounting portion 54a relative to the base 42. Embodiments where the first light source 52a and the second light source 52b are mounted to distinct mounting portions at the same or different locations relative to the detection chamber 46 are contemplated herein.

The first light source 52a and the second light sources 52b may be selected to emit light having different wavelengths. For example, the first light source 52a may emit a first light having a first color and the second light source 52b may emit a second light having a second, distinct color. Alternatively, the first light source 52a may emit a first light within a visible spectrum and the second light source 52b may emit a second light outside of the visible spectrum, such as infrared light for example.

A second mounting portion 54b, located remotely from the first mounting portion 54a, may be configured to support the third light source 52c. Further, in an embodiment, the third light source 52c is arranged at an angle to the light emitted by the first and second light sources 52a, 52b and may emit light having the same wavelength and/or color or a different wavelength and/or color than the first and second light sources 52a, 52b. It should be understood that in an embodiment, a single light source, such as the first light source 52a for example, may be operable to emit light at two or more different wavelengths. Examples of such a light source includes, but is not limited to a bi-color LED. In such embodiments, the optical chamber assembly 40 may have only the single light source, or alternatively, may include multiple light sources, at least one of which is configured to emit light at a plurality of different wavelengths.

The optical chamber assembly 40 additionally includes at least one light sensing device or light receiver 56. Examples of a light sensing device or a light receiver 56 include, but are not limited to a photodiode, an Avalanche PhotoDiode (APDs), a Multi-Pixel Photon Counters (MPPCs), or another suitable photodetector. Although a single light receiver 56 is illustrated in the FIGS., it should be understood that in other embodiments, the optical chamber assembly 40 may include two or more light receivers. In an embodiment, a third mounting portion 54c, separate from the first and second mounting portions 54a, 54b, is operable to support the light receiver 56.

As shown in FIG. 4, the light receiver 56 is disposed to receive light that is emitted by one of the light sources 52a, 52b, 52c and that is then reflected by the ambient materials within the detection chamber 46 toward the light receiver 56. Although not shown in the FIGS., the light emitted from each of the light sources defines an emitter cone. Accordingly, in the illustrated, non-limiting embodiment, the light emitted from the first light source 52a defines a first emitter cone, the light emitted by the second light source 52b defines a second emitter cone, and the light emitted by the third light source 52c defines a third emitter cone. The at least one light receiver 56 similarly has a receiving cone associated therewith. The volume where each emitter cone overlaps with the receiving cone is defined as a sensing volume. Accordingly, in the illustrated, non-limiting embodiment, a first sensing volume is defined between the first emitter cone and the receiving cone, a second sensing volume is defined between the second emitter cone and the receiving cone and a third sensing volume is defined between the third emitter cone and the receiving cone.

The light receiver 56 may be configured to generate an electric output signal in accordance with light being received. That is, for light that is emitted by the first light source 52a, reflected by the ambient materials in the detection chamber 46 and then received by the light receiver 56, the light receiver 56 generates a first output signal. Similarly, for light that is emitted by the second and third light sources 52b, 52c, reflected by the ambient materials in the detection chamber 46 and then received by the light receiver 56, the light receiver 56 generates a second and third output signal, respectively. It should be understood that in addition to each of the light sources 52a, 52b, 52c being arranged at an angle relative to the light receiver 56, each of the mounting portions 54a, 54b, 54c may be oriented such that the corresponding light source 52a, 52b, 52c or light receiver 56 located thereat is arranged at a desired angle relative to a horizontal plane.

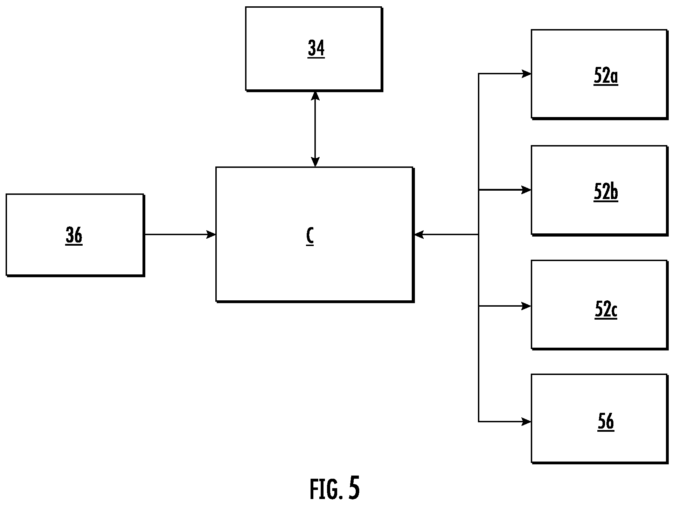

With reference now to FIG. 5, the life safety detector 20 further includes a processing device C in electrical communication with the plurality of light sources 52a, 52b, 52c, and the light receivers 56. The processing device C may be capable of accessing executable instructions, or may include a memory (not shown) capable of storing executable instructions. The executable instructions may be stored or organized in any manner and at any level of abstraction, such as in connection with one or more applications, processes or routines to analyze the signals detected by the one or more light receivers to make alarm decisions after preset threshold levels are reached according to the method described herein.

The life safety detector 20 may be operable in a plurality of modes. The life safety detector 20 is configured to detect the presence of smoke within the ambient atmosphere surrounding the life safety detector 20 during operation in a first mode and is configured to monitor the indoor air quality of the ambient atmosphere surrounding the life safety detector 20 during operation in a second mode. Monitoring of indoor air quality as described herein relates to the detection of dust or other airborne particles referred to as PM_{2.5} particles (those particles having a diameter of 2.5 micrometers or less) and PM₁₀ particles (those particles having a diameter of 10 micrometers or less).

In an embodiment, the life safety detector includes additional components or electronics associated with operation in the second or "indoor air quality" mode. Such components may be used to improve the detection sensitivity of the life safety detector. In an embodiment, the additional components include an analog to digital converter and/or an optical filter. The optical filter may be configured to filter out undesired wavelengths, such as wavelengths outside of the wavelengths emitted by the light sources 52a, 52b, and 52c, or to preferentially detect with a specific polarization or scattered light from PM_{2.5} particles or smoke particles over light reflected from the side of the chamber.

One or more parameters associated with sampling of the atmosphere within the detection chamber 46 of the optical chamber assembly, may be the same, or alternatively, may vary based the mode of operation of the life safety detector. For example, the sensing volumes and/or wavelengths may be different for the smoke detection mode and indoor air quality mode. Alternatively, or in addition, operation in the indoor air quality mode may include amplification of the detection circuit at the processor C, such as by using additional bits on the analog to digital converter to increase the resolution of the signal. Further, the indoor air quality mode may have an increased time during which at least one light source 52a-52c is energized compared to operation in the first "smoke detection" mode, and/or increased intensity or brightness of light emitted by a light source 52a-52c (due to an increased power input) relative to operation in the "smoke detection" mode. In an embodiment, the reference voltage of the analog to digital converter varies between the smoke detection mode and the indoor air quality mode.

The life safety detector 20 may be configured to automatically transform between operation in the first smoke detection mode and operation in the second indoor air quality mode at predetermined intervals. In response to detection of an increased presence of smoke or particulate matter, such as a level that is not elevated enough to trigger an alarm, the timing of the intervals may be delayed or paused. Further, the intervals at which measurements are taken during operation in the smoke detection mode may be the same, or alternatively, may be different than the intervals at which measurements are taken during operation in the indoor air quality mode. Further, it should be understood that embodiments where operation in either mode includes continuous monitoring rather than sampling at intervals is also within the scope of the invention.

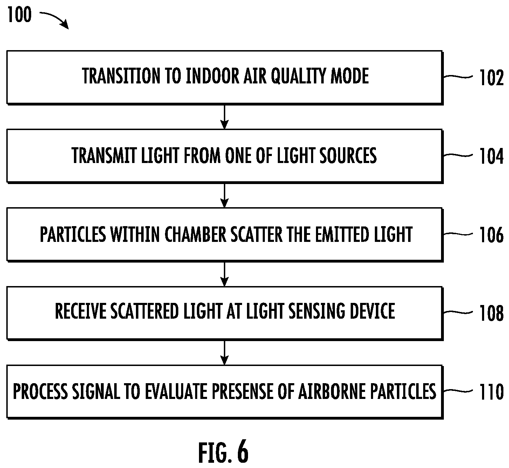

Referring now to FIG. 6, a flow chart of a method of operating the life safety detector 20 to monitor indoor air quality is illustrated. As shown at block 102, the life safety detector 20 is transitioned to operation in the indoor air quality mode used for airborne particle detection. At block 104, light is transmitted from the smoke detector, for example via the second light source 52b. At block 106, the transmitted light is scattered by any airborne particles in the path of the transmitted light within the detection chamber 46. At block 108, the scattered light is received at the light receiver 56 and at block 110 the processing device C is utilized to analyze the scattered light received at the light sensing devices 56 for the presence of the airborne particles, such as PM_{2.5} and PM₁₀ particles. In an embodiment, the steps shown in block 104-110 are repeated using another light source of the optical chamber assembly 40, such as the first light source 52a. The processing device C may further evaluate a ratio of the scattered light received at the light receiver 56 in response to operation of the second light source 52b with the scattered light received at the light receiver 56 in response to operation of the first light source to determine a particle size.

Existing indoor air quality sensors, which are high sensitivity sensors, typically have a highly absorbent chamber that allows for intense energy emission from a light source, such as a light emitting diode. This energy can be used to detect very low concentrations of particles using the principles of Mie light scattering. Existing chambered smoke detectors do not typically include a chamber that can absorb large amounts of excess light energy, and therefore that is suitable to perform indoor air quality monitoring. Accordingly, a configuration of the optical chamber assembly 40 of the life safety detector 20 may be optimized to create a detection chamber 46 having an energy absorbing effect. Such a highly absorbent chamber may also be referred to herein as a "dark photo detection chamber."

A highly absorbent chamber may be quantified by a "clean air count" which remains low even with a very high light intensity because there no particles are present to scatter the light and limited light is reflected from the walls of the chamber. This is distinguishable from a reflective chamber, commonly used in photodetectors, which may cause a light sensing device to reach saturation due to LED brightness even with no particles present in the chamber.

To create a dark photo detection chamber 46, at least one of the base 42 and the optical cover 44 is composed of a substrate having a large concentration of carbon black filler. Examples of such a plastic substrate include polypropylene and nylon 6. Furthermore, the concentration of carbon black within the material is characterized by the surface resistivity of the material. In an embodiment, the substrate has a surface resistivity between about 10 ohm-cm and about 1000ohm-cm. The surfaces of the base 42 and/or optical cover 44, such as facing the interior of the detection chamber 46 for example, may be smooth, or alternatively, may be roughened. A higher surface roughness will enhance the absorption of light.

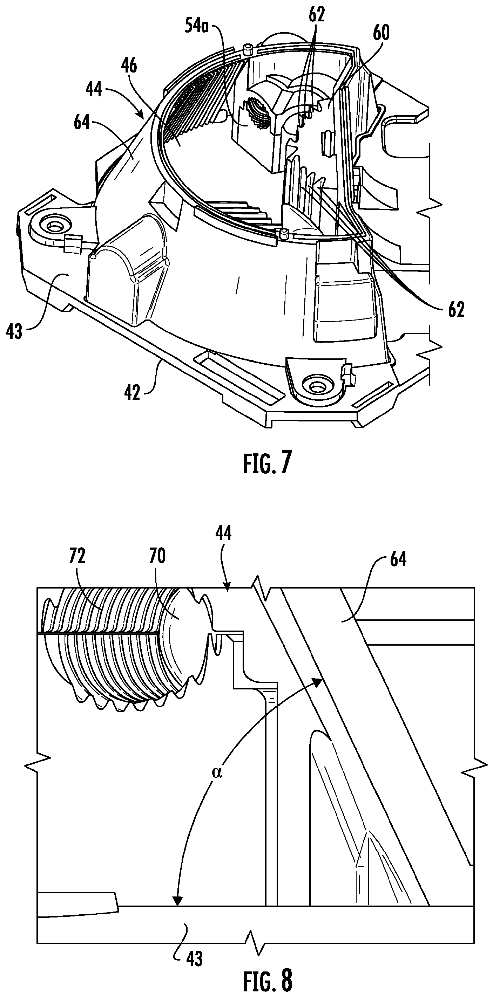

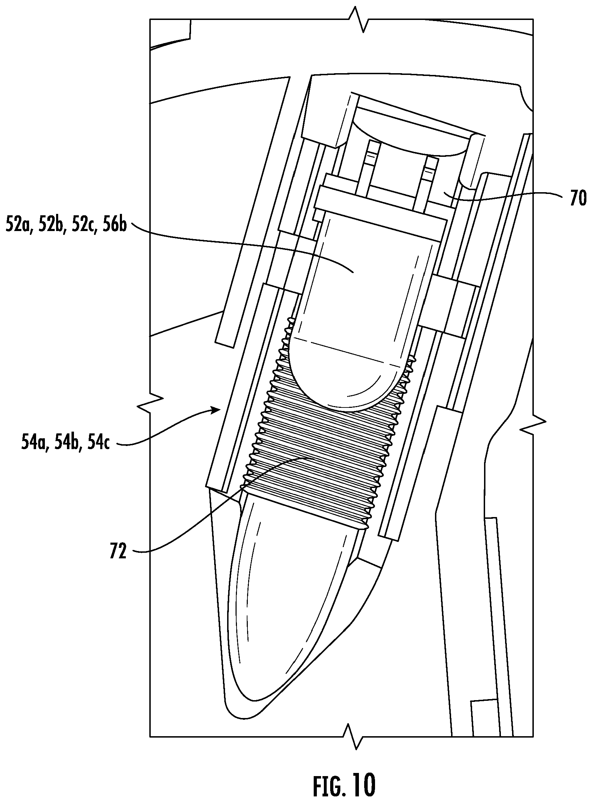

A geometry of the detection chamber 46 may be selected to enhance the light absorbing characteristics thereof. For example, light trapping features or geometries can be included to increase the number of reflections that occur before the excess light enters the light receiver. By increasing the number of reflections created, more light is absorbed by the target surface. With reference to FIGS. 7-10, several different light trapping features are illustrated. A tower 60 is coupled to and extends from the base 42. The tower 60 is located within the optical cover 44, such as at a side of the detection chamber 46. As shown, the tower 60 is positioned to shield or block the light receiver 56 from directly receiving light emitted from a light source, such as the first light source 52a for example.

One or more sides of the tower 60 facing towards the interior of the detection chamber 46 and/or a light source 52a, 52b, 52c or light receiver 56, have a plurality of ridges 62 formed therein to increase the number of reflections and therefore the absorption within the detection chamber 46. Although the plurality of ridges 62 shown extend generally parallel to the longitudinal axis of the tower 60 (or perpendicular to the surface 43 of the base 42), embodiments where the ridges 62 have another configuration are within the scope of the invention.

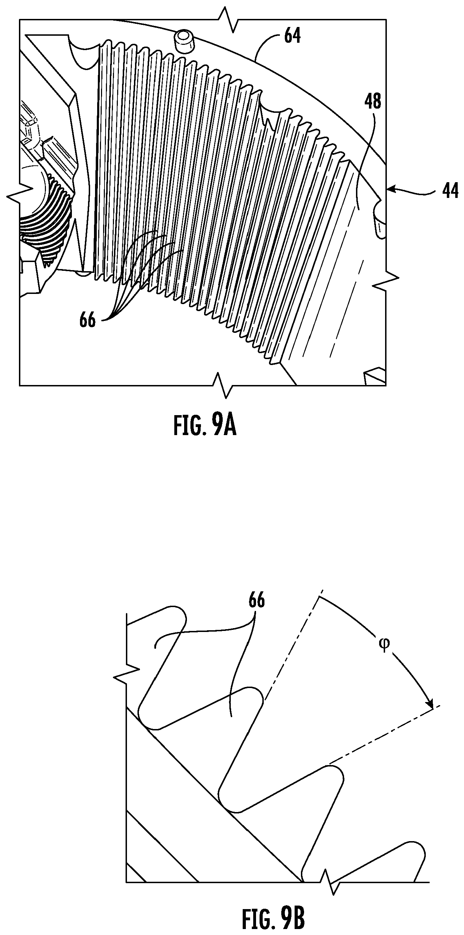

The optical cover 44 of the optical chamber assembly 40 may include one or more light trapping features. As shown, the optical cover 44 includes a curved or semi-circular portion. In the illustrated, non-limiting embodiment, the wall of the optical cover 44, such as the wall 64 of the curved portion thereof for example, is arranged at a non-perpendicular angle α to the base 42 (see FIG. 8). In an embodiment, the wall 64 is arranged at an angle between 40° and 75°, such as 65° for example. However, any angle less than 90° is contemplated herein. Further, as best shown in FIGS. 9a and 9b, one or more linear terraces 66 may be formed at an interior surface 48 of the optical cover 44, such as at the interior surface of the curved wall 64 for example, to increase the number of reflections and therefore the absorption within the detection chamber 46. The plurality of linear terraces 66 include a plurality of ridges or teeth extending over all or only a portion of the height of the wall 64 of the optical cover 44. In the illustrated, non-limiting embodiment, the surfaces of adjacent teeth are arranged at non-parallel angle, such as a 35° angle (φ), relative to one another (see FIG. 9b). However, embodiments where the teeth are arranged within another angle are also within the scope of the invention.

A mounting portion 54a, 54b, 54c configured to support a light source 52a, 52b, 52c and/or a light receiver 56 may be formed with a light trapping feature. Each of the light sources 52a, 52b, 52c and light receiver 56 is arranged within a channel 70 of a respective mounting portion 54a, 54b, 54c. In an embodiment, the optical cover may form a portion of the channel in combination with the mounting portion (see FIG. 8). In an embodiment, the channel 70 includes a plurality or circular or spiral ridges 72 formed therein which function as a light trapping feature. The plurality of spiral ridges 72 may be formed in only the part of the channel 70 defined by the mounting portion 54a, 54b, 54c, or alternatively, in both the mounting portion 54a, 54b, 54c and the optical cover 44 (see FIG. 8). It should be understood that the light trapping features illustrated and described herein are intended as an example only and that any suitable feature configured to increase light absorption within the detection chamber 46 is contemplated herein, provided it falls under the scope of the attached claims.

The embodiments disclosed herein allow for a single life safety detector 20 to detect and monitor other indoor air quality conditions, such as particulate contaminants, microbial contaminants or other conditions, in addition to smoke. This eliminates the need for additional, separately powered indoor air quality sensors to be utilized in the same space in which a smoke detector is placed, resulting in substantial consumer and business cost savings.

The term "about" is intended to include the degree of error associated with measurement of the particular quantity based upon the equipment available at the time of filing the application.

The terminology used herein is for the purpose of describing particular embodiments only and is not intended to be limiting of the present invention. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present invention has been described with reference to an exemplary embodiment or embodiments, it will be understood by those skilled in the art that various changes may be made without departing from the scope of the present invention, as defined by the appended claims.

In addition, many modifications may be made to adapt a particular situation or material to the teachings of the present invention without departing from the scope thereof. Therefore, it is intended that the present invention not be limited to the particular embodiment disclosed as the best mode contemplated for carrying out this present invention, but that the present invention will include all embodiments falling within the scope of the claims.

## Claims

1. A life safety detector (20) comprising:
a housing (22) defining a detection chamber (46) for receiving ambient materials;
at least one light source (52) configured to emit light into the detection chamber (46);
at least one light sensing device (56) configured to receive light reflected from the ambient materials in the detection chamber (46); and
a processing device (C) coupled to the at least one light sensing device (56);
wherein in a first mode of operation of the life safety detector (20), the light received by the at least one light sensing device (56) within the detection chamber (46) is indicative of smoke, and in a second mode of operation of the life safety detector (20), the light received by the at least one light sensing device (56) within the detection chamber (46) is indicative of an indoor air quality,
and wherein the detection chamber (46) comprises a light trapping feature,
**characterized in that**:
the housing (22) defining the detection chamber (46) comprises: a base (42); and an optical cover (44) mounted to the base (42), the detection chamber (46) being formed between the base (42) and an interior surface (48) of the optical cover (44); and
the light trapping feature comprises a tower (60) extending from the base (42), the tower (60) is positioned within the detection chamber to block light emitted from the at least one light source (52) from being directly received by the at least one light sensing device (56); and
at least a portion of the tower (60) comprises a plurality of ridges (62).

2. The life safety detector (20) of claim 1, wherein the optical cover (44) has a wall (64), the wall (64) being arranged at a non-perpendicular angle (α) to the base (42);
and optionally wherein the wall (64) is arranged between about 40° and about 75° relative to the base (42).

3. The life safety detector (20) of either of claims 1 or 2, wherein the optical cover (44) has a wall (64) and the light trapping feature comprises a plurality of linear terraces (66) formed at the interior surface (48) of the wall (64);
and optionally wherein each of the plurality of linear terraces (66) has a tooth, and adjacent teeth are arranged at a non-parallel angle (φ) relative to one another.

4. The life safety detector (20) of any preceding claim, wherein the base (42) comprises at least one mounting portion (54) having a channel (70) for supporting one or more of the at least one light source (52) and the at least one light sensing device (56), the light trapping feature comprising a plurality of spiral ridges (72) formed at the channel (70).

5. The life safety detector (20) of any of claims 1 to 4, wherein at least one of the base (42) and the optical cover (44) includes carbon black.

6. The life safety detector (20) of claim 5, wherein at least one of the base (42) and the optical cover (44) has a surface resistivity between about 10 ohm-cm and about 1000ohm-cm.

7. The life safety detector (20) of any of claims 1 to 6, wherein a surface of at least one of the base (42) and the optical cover (44) facing the detection chamber (46) is roughened.

8. The life safety detector (20) of any preceding claim, wherein at least one of the light sensing devices (56) features an optical filter.

9. The life safety detector (20) of claim 8, wherein the optical filter selectively removes light of specified wavelengths.

10. The life safety detector (20) of claim 8 or 9, wherein the optical filter selectively removes light of specified polarizations.

11. A method of operating the life safety detector (20) of claim 1, the method comprising:
switching from the first mode for detecting smoke to the second mode for monitoring the indoor air quality;
transmitting a light from the at least one light source (52) into the detection chamber (46), which is positioned within an interior of the housing (22) of the life safety detector (20); and
receiving a scattered light within the detection chamber (46) at the at least one light sensing device (56), wherein the scattered light is indicative of a presence of airborne particles having a diameter less than 2.5 micrometers and 10 micrometers.

12. The method of claim 11, wherein switching from the first mode for detecting smoke to the second mode for monitoring the indoor air quality comprises at least one of increasing an intensity of the light transmitted from the at least one light source (52) relative to the first mode and increasing a time that the at least one light source (52) is energized relative to the first mode.

13. The method of claim 11 or 12, wherein a wavelength of the light transmitted from the at least one light source (52) during the second mode is different than the wavelength of the light transmitted from the at least one light source (52) during the first mode.

14. The method of any of claims 11 to 13, wherein the light transmitted from the at least one light source (52) during the second mode is infrared.

## Patentansprüche

1. Lebenssicherheitserkenner (20), umfassend:
ein Gehäuse (22), das eine Erkennungskammer (46) zur Aufnahme von Umgebungsmaterialien definiert;
mindestens eine Lichtquelle (52), die ausgebildet ist, um Licht in die Erkennungskammer (46) zu emittieren;
mindestens eine Lichtsensorvorrichtung (56), die ausgebildet ist, um Licht zu empfangen, das von den Umgebungsmaterialien in der Erkennungskammer (46) reflektiert wird; und
eine Verarbeitungsvorrichtung (C), die mit der mindestens einen Lichtsensorvorrichtung (56) gekoppelt ist;
wobei in einem ersten Betriebsmodus des Lebenssicherheitserkenners (20) das von der mindestens einen Lichtsensorvorrichtung (56) in der Erkennungskammer (46) empfangene Licht auf Rauch hinweist und in einem zweiten Betriebsmodus des Lebenssicherheitserkenners (20) das von der mindestens einen Lichtsensorvorrichtung (56) in der Erkennungskammer (46) empfangene Licht auf die Innenraumluftqualität hinweist,
und wobei die Erkennungskammer (46) eine Lichteinfangfunktion umfasst,
**dadurch gekennzeichnet, dass**:
das die Erkennungskammer (46) definierende Gehäuse (22) umfasst: eine Basis (42); und eine optische Abdeckung (44), die an der Basis (42) montiert ist, wobei die Erkennungskammer (46) zwischen der Basis (42) und einer Innenoberfläche (48) der optischen Abdeckung (44) gebildet ist; und
die Lichteinfangfunktion einen Turm (60) umfasst, der sich von der Basis (42) erstreckt, der Turm (60) innerhalb der Erkennungskammer positioniert ist, um zu verhindern, dass Licht, das von der mindestens einen Lichtquelle (52) emittiert wird, direkt von der mindestens einen Lichtsensorvorrichtung (56) empfangen wird; und
mindestens ein Abschnitt des Turms (60) eine Vielzahl von Rippen (62) umfasst.

2. Lebenssicherheitserkenner (20) nach Anspruch 1, wobei die optische Abdeckung (44) eine Wand (64) aufweist, wobei die Wand (64) in einem nicht senkrechten Winkel (α) zur Basis (42) angeordnet ist;
und wobei die Wand (64) wahlweise zwischen etwa 40° und etwa 75° in Bezug zur Basis (42) angeordnet ist.

3. Lebenssicherheitserkenner (20) nach einem der Ansprüche 1 oder 2, wobei die optische Abdeckung (44) eine Wand (64) aufweist und die Lichteinfangfunktion eine Vielzahl von linearen Terrassen (66) umfasst, die an der Innenoberfläche (48) der Wand (64) gebildet sind;
und wobei jede der Vielzahl linearer Terrassen (66) wahlweise einen Zahn aufweist und benachbarte Zähne in einem nicht parallelen Winkel (φ) in Bezug zueinander angeordnet sind.

4. Lebenssicherheitserkenner (20) nach einem vorstehenden Anspruch, wobei die Basis (42) mindestens einen Montageabschnitt (54) umfasst, der einen Kanal (70) zum Stützen einer oder mehrerer der mindestens einen Lichtquelle (52) und der mindestens einen Lichtsensorvorrichtung (56) aufweist, wobei die Lichteinfangfunktion eine Vielzahl von spiralförmigen Rippen (72) umfasst, die am Kanal (70) gebildet sind.

5. Lebenssicherheitserkenner (20) nach einem der Ansprüche 1 bis 4, wobei mindestens eine von der Basis (42) und der optischen Abdeckung (44) Ruß einschließt.

6. Lebenssicherheitserkenner (20) nach Anspruch 5, wobei mindestens eine von der Basis (42) und der optischen Abdeckung (44) einen Oberflächenwiderstand zwischen etwa 10 Ohm-cm und etwa 1000 Ohm-cm aufweist.

7. Lebenssicherheitserkenner (20) nach einem der Ansprüche 1 bis 6, wobei eine der Erkennungskammer (46) zugewandte Oberfläche von mindestens einer von der Basis (42) und der optischen Abdeckung (44) aufgeraut ist.

8. Lebenssicherheitserkenner (20) nach einem vorstehenden Anspruch, wobei mindestens eine der Lichtsensorvorrichtungen (56) über einen optischen Filter verfügt.

9. Lebenssicherheitserkenner (20) nach Anspruch 8, wobei der optische Filter selektiv Licht bestimmter Wellenlängen entfernt.

10. Lebenssicherheitserkenner (20) nach Anspruch 8 oder 9, wobei der optische Filter selektiv Licht bestimmter Polarisationen entfernt.

11. Verfahren zum Bedienen des Lebenssicherheitserkenners (20) nach Anspruch 1, wobei das Verfahren umfasst:
Umschalten vom ersten Modus zur Raucherkennung in den zweiten Modus zum Überwachen der Innenraumluftqualität;
Übertragen eines Lichts von der mindestens einen Lichtquelle (52) in die Erkennungskammer (46), die innerhalb eines Innenraums des Gehäuses (22) des Lebenssicherheitserkenners (20) positioniert ist; und
Empfangen eines gestreuten Lichts innerhalb der Erkennungskammer (46) an der mindestens einen Lichtsensorvorrichtung (56), wobei das gestreute Licht auf ein Vorhandensein von luftgetragenen Partikeln hinweist, die einen Durchmesser von weniger als 2,5 Mikrometern und 10 Mikrometern aufweisen.

12. Verfahren nach Anspruch 11, wobei Umschalten vom ersten Modus zum Erkennen von Rauch in den zweiten Modus zum Überwachen der Innenraumluftqualität mindestens eines von Erhöhen einer Intensität des von der mindestens einen Lichtquelle (52) übertragenen Lichts in Bezug zum ersten Modus und Erhöhen einer Zeit umfasst, in der die mindestens eine Lichtquelle (52) in Bezug zum ersten Modus energiegeladen ist.

13. Verfahren nach Anspruch 11 oder 12, wobei sich eine Wellenlänge des von der mindestens einen Lichtquelle (52) während des zweiten Modus übertragenen Lichts von der Wellenlänge des von der mindestens einen Lichtquelle (52) während des ersten Modus übertragenen Lichts unterscheidet.

14. Verfahren nach einem der Ansprüche 11 bis 13, wobei das von der mindestens einen Lichtquelle (52) während des zweiten Modus übertragene Licht infrarot ist.

## Revendications

1. Détecteur (20) de sécurité des personnes, comprenant :
un boîtier (22) définissant une chambre de détection (46) pour recevoir des matériaux ambiants ;
au moins une source de lumière (52) configurée pour émettre de la lumière dans la chambre de détection (46) ;
au moins un dispositif de détection de lumière (56) configuré pour recevoir la lumière réfléchie par les matériaux ambiants dans la chambre de détection (46) ; et
un dispositif de traitement (C) couplé à l'au moins un dispositif de détection de lumière (56) ;
dans lequel, dans un premier mode de fonctionnement du détecteur (20) de sécurité des personnes, la lumière reçue par l'au moins un dispositif de détection de lumière (56) à l'intérieur de la chambre de détection (46) est indicative de fumée, et dans un second mode de fonctionnement du détecteur (20) de sécurité des personnes, la lumière reçue par l'au moins un dispositif de détection de lumière (56) à l'intérieur de la chambre de détection (46) est indicative d'une qualité d'air intérieur,
et dans lequel la chambre de détection (46) comprend une caractéristique de piégeage de lumière,
**caractérisé en ce que** :
le boîtier (22) définissant la chambre de détection (46) comprend : une base (42) ; et un couvercle optique (44) monté sur la base (42), la chambre de détection (46) étant formée entre la base (42) et une surface intérieure (48) du couvercle optique (44) ; et
la caractéristique de piégeage de lumière comprend une tour (60) s'étendant depuis la base (42), la tour (60) est positionnée à l'intérieur de la chambre de détection pour empêcher la lumière émise par l'au moins une source de lumière (52) d'être reçue directement par l'au moins un dispositif de détection de lumière (56) ; et
au moins une portion de la tour (60) comprend une pluralité de crêtes (62).

2. Détecteur (20) de sécurité des personnes, selon la revendication 1, dans lequel le couvercle optique (44) présente une paroi (64), la paroi (64) étant agencée à un angle (α) non perpendiculaire à la base (42) ;
et facultativement dans lequel la paroi (64) est agencée entre environ 40° et environ 75° par rapport à la base (42).

3. Détecteur (20) de sécurité des personnes selon l'une quelconque des revendications 1 ou 2, dans lequel le couvercle optique (44) présente une paroi (64) et la caractéristique de piégeage de lumière comprend une pluralité de terrasses linéaires (66) formées au niveau de la surface intérieure (48) de la paroi (64) ;
et facultativement dans lequel chacune de la pluralité de terrasses linéaires (66) présente une dent, et des dents adjacentes sont agencées à un angle (φ) non parallèle l'une par rapport à l'autre.

4. Détecteur (20) de sécurité des personnes selon une quelconque revendication précédente, dans lequel la base (42) comprend au moins une portion de montage (54) présentant un canal (70) pour supporter un ou plusieurs parmi l'au moins une source de lumière (52) et l'au moins un dispositif de détection de lumière (56), la caractéristique de piégeage de lumière comprenant une pluralité de crêtes en spirale (72) formées au niveau du canal (70).

5. Détecteur (20) de sécurité des personnes selon l'une quelconque des revendications 1 à 4, dans lequel au moins l'un parmi la base (42) et le couvercle optique (44) inclut du noir de carbone.

6. Détecteur (20) de sécurité des personnes selon la revendication 5, dans lequel au moins l'un parmi la base (42) et le couvercle optique (44) présente une résistivité de surface comprise entre environ 10 ohm-cm et environ 1 000 ohm-cm.

7. Détecteur (20) de sécurité des personnes selon l'une quelconque des revendications 1 à 6, dans lequel une surface d'au moins l'un parmi la base (42) et le couvercle optique (44) faisant face à la chambre de détection (46) est rugueuse.

8. Détecteur (20) de sécurité des personnes selon une quelconque revendication précédente, dans lequel au moins l'un des dispositifs de détection de lumière (56) comporte un filtre optique.

9. Détecteur (20) de sécurité des personnes selon la revendication 8, dans lequel le filtre optique élimine sélectivement la lumière de longueurs d'onde spécifiées.

10. Détecteur (20) de sécurité des personnes selon la revendication 8 ou la revendication 9, dans lequel le filtre optique élimine sélectivement la lumière de polarisations spécifiées.

11. Procédé de fonctionnement du détecteur (20) de sécurité des personnes selon la revendication 1, le procédé comprenant :
la commutation du premier mode de détection de fumée au second mode de surveillance de la qualité d'air intérieur ;
l'émission d'une lumière à partir de l'au moins une source de lumière (52) dans la chambre de détection (46), qui est positionnée à l'intérieur du boîtier (22) du détecteur (20) de sécurité des personnes ; et
la réception d'une lumière diffusée à l'intérieur de la chambre de détection (46) au niveau de l'au moins un dispositif de détection de lumière (56), dans lequel la lumière diffusée est indicative d'une présence de particules en suspension dans l'air présentant un diamètre inférieur à 2,5 micromètres et 10 micromètres.

12. Procédé selon la revendication 11, dans lequel la commutation du premier mode de détection de fumée au second mode de surveillance de la qualité d'air intérieur comprend au moins l'une parmi l'augmentation d'une intensité de la lumière émise par l'au moins une source de lumière (52) par rapport au premier mode et l'augmentation d'un temps pendant lequel l'au moins une source de lumière (52) est alimentée par rapport au premier mode.

13. Procédé selon la revendication 11 ou la revendication 12, dans lequel une longueur d'onde de la lumière émise à partir de l'au moins une source de lumière (52) pendant le second mode est différente de la longueur d'onde de la lumière émise à partir de l'au moins une source de lumière (52) pendant le premier mode.

14. Procédé selon l'une quelconque des revendications 11 à 13, dans lequel la lumière émise à partir de l'au moins une source de lumière (52) pendant le second mode est infrarouge.
